# EUROPEAN PATENT APPLICATION

(11) **EP 4 201 909 A1**
(43) Date of publication of application: **28.06.2023**
(21) Application number: 21857065.3
(22) Date of filing: 17.08.2021
(51) Int. Cl.: C04B 16/06, C04B 14/00, B01D 21/00

(54) **METHOD WITH HIGH SOLID RETENTION CAPACITY FOR FIBER CEMENT PRODUCTION, USE AND PRODUCTION METHOD WITH HIGH SOLID RETENTION CAPACITY AND FIBER CEMENT ARTICLE**

(30) Priority: 17.08.2020 BR 102020016777
(71) Applicant: Suzano S.A., 41810-012 Pituba, Salvador, BA (BR); Universidade de São Paulo - USP, 05508-220 São Paulo (BR)
(72) Inventor: SIQUEIRA, Germano, 12240-681 São José dos Campos - SP (BR); JOHN, Vanderley Moacyr, 05580-000 São Paulo - SP (BR); DA SILVA, Beatriz Rodrigues, 04847-060 São Paulo - SP (BR); CARDOSO, Fábio Alonso, 11065-000 Santos - SP (BR); JUNIOR, Holmer Savastano, 13632-542 Pirassununga - SP (BR)
(74) Representative: Aera A/S
(86) International application number: PCT/BR2021/050348
(87) International publication number: WO 2022/036429

(57) **Abstract**

The present disclosure relates to the field of building materials. In particular, the present disclosure relates to fiber cement production methods and processes that exhibit high solid retention capacity in the dewatering step, providing increased productivity and potentially other process gains related to the lower concentration of solids and additives in the process water.

## Description

### FIELD OF INVENTION

The present disclosure relates to the field of building materials. In particular, the present disclosure relates to fiber cement production methods and processes that exhibit high solid retention capacity in the dewatering step, providing increased productivity and potentially other process gains related to the lower concentration of solids and additives in the process water.

### BACKGROUND OF THE INVENTION

Fiber cements are generally known in the art. However, the production of the fiber cement comprises a dewatering step that causes the increase of the solids concentration of the suspension, with deposition of layers of this concentrated suspension on felt for forming the fiber cement products with subsequent curing (air, thermal or with the aid of forced carbonation) to promote stiffening and development of mechanical strength typically associated with hydraulic cementitious materials. The solids not retained in the fiber cement blanket recirculate in the production system without being discarded and, in addition to impairing the efficiency of the production process, can still generate other problems such as: (a) the cement recirculating in the system hydrates and loses its binding capacity and, therefore, when incorporated into the fiber cement acts only as an inert load of high cost and high environmental impact; (b) the accumulation of some polymeric materials (flocculants, defoamers, lignin) in the system greatly affects the quality of the final product; (c) when the production system is very contaminated or loaded with solids, there is a need for treatment of the process water in the decantation tank and, in this case, costs of operation and handling of the decanted sludge are involved, as well as investments in assets to carry out the decantation step.

The art tries to solve this problem.

The patent US20160083808A1 deals with increased solid retention in lignocellulosic hydrolysates, without specifically referring to its use in fibre cement.

The patent US6872246B2 deals with composite materials reinforced with high performance cellulose fibers, but without referring to specific solid retention specifically during the industrial production process.

### BRIEF DESCRIPTION OF THE INVENTION

The present invention provides a method with high solid retention capacity for the production of fiber cement comprising adding and mixing dispersion water to at least one of powder material, reinforcing fiber material, cellulose filament, and cellulose fiber, so as to form a fiber cement suspension; and dewatering the fiber cement suspension, so as to obtain a fiber cement.

### BRIEF DESCRIPTION OF THE DRAWINGS

Figure 1 is a scanning electron microscopy image for CF2, with a higher degree of defibrillation compared to CF 1.
Figure 2 is a scanning electron microscopy image of CF2, with a higher degree of defibrillation compared to CF 1.
Figure 3 is an apparatus for quantifying fibre cement retention through gravity filtration with 0.4 mm tamis.
Figure 4 is an equipment for measuring the water retention of mortars under vacuum: front view (a); top view (b), used to complete the mass balance after gravity filtration of fiber cement.
Figure 5 is a curve demonstrating the passing mass in the tamis by gravity as a function of time: averages of the six replicates for each formulation up to 30 min of assay.
Figure 6 is a curve demonstrating the passing mass in the tamis by gravity as a function of time: averages of the six replicates for each formulation up to 2 min of assay.
Figure 7 is a bar graph demonstrating the retention of solids and water in the tamis after gravity filtration for the different analyzed formulations.

### DETAILED DESCRIPTION OF THE INVENTION

The present invention relates to fibrocement production methods and processes that have a high solid retention capacity in the dewatering step, providing increased productivity and potentially other process gains related to the lower concentration of solids and additives in the process water.

The term "fiber cement" as used herein refers to cementitious material that contains fibrous material and that can take any desired shape. The terms "fiber cement suspension", "fibre cement paste" or "fiber cement slurry" refer generally to slurries that at least include water, fibers and cement. In general, fiber cement is obtained after rinsing the diluted suspension of particles (reactive and/or inert), organic and/or synthetic fibers or minerals (such as asbestos) and chemical additives, which can (prior to curing) be shaped into whatever form is desired for the production of the component, followed by curing for development of mechanical strength and other properties relevant to the performance of the fiber cement component.

The present invention is embodied through methods with high solid retention capacity for the production of fiber cement comprising adding and mixing dispersing water to at least one of powder material, reinforcing fiber material, cellulose filament and cellulose fiber so as to form a fiber cement suspension; and dewatering the fiber cement suspension so as to obtain a fiber cement. The present invention also discloses a use of method with high solids retention capacity for the production of fibre cement for the manufacture of a fibre cement article, as well as a production process with high solid retention capacity for the production of fiber cement comprising: a) preparing a fiber cement suspension by the addition and mixing of a1) dispersion water and a2) powdery material, reinforcing fiber material, cellulose filament and cellulose fiber so as to form a fiber cement suspension, b) dewatering the fiber cement suspension, obtaining a fiber cement with a predetermined thickness.

### Powdery material

The term "powdery material" preferably refers to a material comprising a cementitious material. The term cementitious material, as used herein, includes hydraulic substances that harden in the presence of water, such as Portland cement, silicate-based cements, aluminate-based cements such as calcium aluminate, pozzolanic cements, composite cements, geopolymer-based cements activated by alkaline solutions, magnesian cements, blast furnace slag cements, for example.

In one aspect, the water is present in a ratio of 0.4 to 10 times by weight of the powdery material in the composition of the fiber cement suspension.

### Reinforcing fiber material

In one aspect, the present invention comprises a reinforcing fiber material, characteristic of the fibrocement composition. The reinforcing fiber material of the present invention may comprise at least one fiber selected from process fibers, plant natural fibers, mineral natural organic fibers, synthetic fibers, which may be asbestos fibers, polymeric fibers, Poly(vinyl acetate) (PVA) fibers, poly acrylonitrile (PAN), polypropylene (PP), polyethylene terephthalate (PET), polyethylene (PE) fibers, etc.), inorganic synthetic fibers, glass fibers or synthetic rock wool fiber, wool fiber), metallic synthetic fiber, steel fiber and the like, their alloys, other diverse alloys, preferably, the reinforcing fiber material is a Poly(vinyl acetate) (PVA) and polypropylene (PP) fiber, or mixtures thereof.

Preferably, the reinforcing fiber material comprises reinforcing fibers having a length between 0.5 and 20 mm.

The reinforcing fiber material of the present invention may be present in a proportion of 0.1% to 3% by weight of the pulverulent material.

### Cellulose fibre

The term "cellulose fiber" as used herein includes cellulosic fibers preferably refined to a degree between 45 and 70 Schopper Riegler. The individual cellulose fibers are typically 0.6 to 4 mm in length.

In one aspect, the cellulose fiber may be from softwood and hardwood cellulosic pulps, bleached, unbleached, recycled fibers, cellulose-based products (paper), or combinations thereof.

Typically, the cellulose fiber is present in a proportion of 1-10% by weight of the pulverulent material, preferably between 2-6% by weight of the pulverulent material.

### Cellulose filament

In one aspect, the present invention comprises a cellulose filament. The inventors have found that the addition of cellulose filament provides solids retention in the fiber cement during the dewatering step of the fiber cement suspension and assists in water retention, improving the hydration of the cement.

Notably, the cellulose filament is obtained by a defibrillation process, which may occur by a method of shearing the cellulose fibrils that promotes their separation. Examples of such processes include high-pressure homogenization, microfluidization, colloidal milling, mechanical refining, among others.

In one aspect, the cellulose filament may be in a pre-dispersed form. Pre-dispersion is by mixing the cellulose filament with an aqueous medium so as to be subsequently used in the methods and processes disclosed herein.

The cellulose filament according to the present invention may be present in a proportion of 0.1% to 3% by weight of the powdery material, preferably 0.4 to 1.5% by weight of the powdery material.

In one aspect, the cellulose filament may have a diameter between 20 nm and 700 nm, preferably from 80nm to 600 nm and more preferably from 300 nm to 500 nm. Furthermore, the cellulose filament may have a length greater than 1 µm and preferably greater than 10 micrometers.

In one aspect, the cellulose filament can be a microfibrillated cellulose, a nanofibrillated cellulose, or a cellulose filament. The term microfibrillated cellulose, as used herein includes cellulose-based fibrillary components, but not limited to this composition exclusively, which may contain traces of hemicelluloses, and may be originated from a thermo-chemical-mechanical process, comprising kraft, soda, sulfite, CTMP, among others.

### Mineral additions

The present invention optionally comprises one or more mineral additions (i) fillers (ii) rheological modifiers, such as particles with rheological behavior modifying action of the fiber cement suspension, or (iii) mineral additions with cementitious action, which may originally come in the cement or be added in the fiber cement production step.

The used filler is as a replacement material, that is, it has physical properties similar to cement and is basically used to replace a reactive material with a predominantly inert one in the formulation, aiming reducing costs and environmental impact, associated CO₂ reduction.

Suitable examples of fillers are calcium carbonate, magnesium carbonate, calcium and magnesium carbonate, silica, alumina, phyllites, iron oxides, iron hydroxides, magnesium oxide, magnesium hydroxide, calcium hydroxide, mining residues and other industries containing the cited materials, and mixtures thereof.

### Flocculant

In another embodiment, the methods of the present invention may further comprise at least one flocculant. In this sense, the present method with high solids retention capacity for fibre cement production and production process may further comprise a flocculant. Flocculants are water-soluble polymers that can be cationic, anionic, non-ionic (without charges or with slightly negative charges), amphoteric (positive and negative charges), hydrophobic or hydrophilic, usually with a molar mass ranging from low (for example < 103 g/mol) to high (for example > 106 g/mol) and may present linear or branched molecular structure, or mixtures thereof.

Examples of flocculants are polyacrylamides (PAM). Anionic polyacrylamides (PAM) are most effective for fiber cement and commonly use copolymers of acrylamide and acrylic acid. Alternative found in the literature is the double dosage system employing phenol-formaldehyde resin (PFR) and poly (ethylene oxide) (PEO), or mixtures thereof.

The present method comprises a step of dewatering the fibre cement suspension, from which the fibre cement blanket is obtained, prior to a possible curing step. Preferably, the dewatering step is carried out by means of suction, via a water-permeable conveyor belt. The dewatering may be performed in ways known to the art and results in a fibre cement. Preferably, the water returns to the closed water circuit of the process.

In this way, the present invention is embodied through a method with high solids retention capacity for the production of fibre cement comprising:
a) preparing a fiber cement suspension by adding and mixing:
a1) dispersion water and
a2) powdery material, reinforcing fiber material, cellulose filament and cellulose fiber so as to form a fiber cement suspension,
b) dewatering the fiber cement suspension, obtaining a fiber cement.

Notably, step a) of the present method can be achieved in several ways. In one aspect, step a) of adding and mixing the water may take place by adding the powdery material to the water, forming a mixture of water and powdery material, with the following addition of the remaining reinforcing fiber material, cellulose filament and cellulose fiber, forming a fiber cement suspension. In another aspect, step a) may take place by adding the reinforcing fiber material to the water, forming a mixture of water and reinforcing fiber material, with the following addition of the remaining powdery material, cellulose filament and cellulose fiber, forming a fiber cement suspension. In yet another aspect, step a) step can take place by adding the cellulose filament to the water, forming a mixture of water and cellulose filament, with the following addition of the others: powdery material, reinforcing fiber material and cellulose fiber, forming a fiber cement suspension. In yet another aspect step a) of addition and mixing can take place by adding the cellulose fiber to the water, forming a mixture of water and cellulose fiber, with the following addition of the remaining powdery material, reinforcing fiber material and cellulose filament, forming a fiber cement suspension.

In one aspect, the water of the method having high solids retention capacity for fibre cement production may be added in a ratio of 0.4 to 10 times by weight of the powdery material. Accordingly, the reinforcing fiber material may be added in the proportion of 0.1% to 3% by weight of the powdery material; the cellulose fiber may be added in the proportion of 1-10% by weight of the powdery material, preferably between 2 to 6% by weight of the powdery material;

In one aspect, the cellulose filament of the method having high solids retention capacity for the production of fibre cement may be added in the proportion of 0.1 % to 3% by weight of the powdery material, preferably 0.4 to 1.5% by weight of the powdery material. In one aspect, the cellulose filament may be in a pre-dispersed form.

In one aspect, the cellulose filament added in the method with high solid retention capacity for fibre cement production, may be a pre-dispersed microfibrillated cellulose.

In one aspect, the dispersion water of the method having high solid retention capacity for fibre cement production may be added in a mass ratio of between 0.4 and 10 times the mass of the powdery material.

Accordingly, to obtain an even further diluted fiber cement suspension, for example, water may be added at once, or interspersed with the addition of each one of powdery material, reinforcing fiber material, cellulose filament, and cellulose fiber to form a fiber cement suspension, concomitantly, or in any other manner, an amount of water of up to 10 times the mass of the powdery material, providing a fiber cement dispersion well fluid enough to provide a suspension having solids content, e.g., pulverulent material, reinforcing fiber material, cellulose filament, cellulose fiber, and inert (or reactive) solid particles of between 50 g/L and 500 g/L.

### Dewatering

In the method and process described herein, at least part of the water is removed from the fiber cement suspension in at least one dewatering step, to provide a fiber cement. Typically, at least part of the water is removed by mechanical means, such as by filtration through a screen, optionally with the aid of vacuum boxes.

The dewatering step of the present invention can be carried out initially by fixing the fibre cement layer in tamises, followed by vacuum (sub-pressure) along the conveyor belts and finally by pressing into forming cylinders. The step of dewatering the fiber cement suspension may further be carried out by suctioning through a water-permeable conveyor belt.

The fiber cement, preferably in the form of a obtained fiber cement blanket may be subjected to a curing process to promote the hydration (and optionally carbonation) reactions of the cementitious materials present in the fiber cement responsible for stiffening, development of mechanical strength and other relevant properties of the fiber cement component.

In this sense, once the fiber cement is obtained, the manufacture of fiber cement components can be performed according to any known procedure.

A fiber cement component is obtained by the Hatschek/Mazza process obtained by stacking blades while they are still wet, to obtain a laminate of desired thickness. Often, the accumulation of the layered laminate is achieved by continuous winding of the blades in a cylinder (mandrel). This cylindrical product may be held in the form of a tube or may be cut to form a flat blade or a plate of some certain shape (e.g., a corrugated blade), with further shaping of the fresh flat blade, with the strength and flexibility required for such shaping. As stated, preferably, the final stage of production is the curing, which can be carried out at room temperature or by heat treatment. The Hatschek production process is the most common for the manufacture of plates and its modification, Mazza process is applied in the manufacture of pressure pipes.

### The amount of solids

As the present invention also provides a higher amount of water in the fiber cement after the dewatering step, the amount of solids in terms of fiber cement mass may vary significantly, being able to produce a fiber cement with a higher volume than the suspensions of the art.

The present invention provides a water level in the fiber cement ranging from 10 to 40 percent by mass of the fiber cement after the dewatering step.

### Curing

A curing step of the obtained fiber cement component can be used in the present methods and processes, which can be done by treating the fiber cement component at room temperature in a tunnel with moisture conditions kept under control or by steam curing at higher temperature to accelerate the hardening process and development of mechanical strength. Autoclave curing can also be used, as well as CO₂ gas-rich chamber curing to promote carbonation reactions.

### Fibre cement article

Thus, the process and method of the present invention may provide a fiber cement article, typically applied in the construction industry. For example, plates, facade plates, tiles, siding, etc.

In this manner, a fibre cement component may be obtained by a method or process having high solids retention capacity of the present invention. Such production of a fibre cement component may take place by applying a curing step to the fibre cement component or without the curing step.

### Use

Still, the present invention provides the use of method with high solids retention capacity for the production of fiber cement for the manufacture of a fiber cement article, typically applied in the construction industry. For example, the use is given to the manufacture of plates. Still, the use can be given to provide an external surface to the wall, both internal and external to a building or construction, such as facade plates, tiles, siding, etc.

In one aspect, the use of a method with high solids retention capacity for the production of fiber cement is by applying a curing step of the article obtained by producing a fiber cement article according to the present invention.

In one aspect, the use of method with high solids retention capacity for the production of fiber cement, may be for the manufacture of sheet metal.

In this sense, in reference to a general description of the Hatschek process, it has five identified production stages:
1 - Preparation of the slurry, which consists of mixing the solids to the water;
2 - Formation of the blade on the sieve cylinder and its continuous application on the felt belt;
3 - Accumulation of the blades (layers) forming a laminate, which is wound in a cylinder (mandrel), until the desired thickness is obtained;
4 - Optionally, cutting and modeling of the laminate;
5 - Curing.

The formation of the blades occurs with the operation of dewatering the slurry. At this stage, as the screen cylinder rotates, a fiber cement suspension layer is deposited on its surface, which transforms into a coherent layer as water is filtered to the dry side of the screen cylinder. The properties of the laminate depend on the filtration rate.

In this manner, the addition of the cellulose filament to the Hatschek process slurry results in a fiber cement suspension, which can be carried out by the following steps:
(1) providing a fiber cement suspension comprising powdery material, reinforcing fiber material, cellulose filament and cellulose fiber,
(2) discharging the fiber cement suspension onto a conveyor belt, and
(3) dewatering the fiber cement suspension to form a fiber cement having a predetermined thickness.

In one aspect, step (3) of the production process with high solids retention capacity for the production of fiber cement, takes place by dewatering the fiber cement suspension, which can be achieved by at least one of: conveyor belt, sieve cylinder, or both. For example, the fiber cement suspension may be dewatered by suction. For example, a water-permeable conveyor belt can be used to promote dewatering. Alternatively, a water-permeable sieve cylinder may be used. Preferably, the dewatering of the fiber-cement suspension takes place by suction through a water-permeable conveyor belt.

By using a water-permeable conveyor belt to remove excess water from the fibre cement, it is possible to precisely adjust the thickness and density of the sheet metal, without resulting in a return of the thickness of the fibre cement article at the end of the production process with high solids retention capacity.

Other manufacturing processes include the Magnani process, injection, extrusion, flow and others, as an alternative to the Hatschek process.

For example, US patents 3,974,024 and US 4,194,946 reveal processes for the continuous preparation of reinforced cement products. In these processes, the fiber material and the cement suspension are deposited on the filter belt by means of separate devices and in separate process steps. Subsequently, the cement slurry and fiber material, deposited on the belt, are treated with the so-called "beating" device in order to mix the fiber material into the slurry and obtain at least some degree of homogeneous dispersion of the fiber material in the cementitious matrix. There is no obstacle in obtaining a fiber cement suspension comprising cellulose fiber which, after dewatering, will result in a fiber cement article. If the presence of the dewatering step is sufficient, this result is achieved.

If a filtration is not used, other means of drainage are possible. In this sense, the present invention is not particular only to the Hatschek process. In particular, in alternative processes, the dewatering step is normally carried out only by means of mechanical force, such as by means of a belt press or a pressure plate.

Further, the step of feeding the fiber cement suspension may be performed continuously or not continuously. If continuously, a fiber cement suspension stream is produced using one or more delivery devices. Such feed devices have at least one outlet, allowing the fiber cement suspension to flow continuously. Further, the feed devices may comprise one or more inlets, which are directly or indirectly operatively connected to a fiber cement suspension source. The fiber cement suspension sources may be, for example, but are not limited to one or more continuous feed systems or one or more continuous mixing devices constructed so as to form a fiber cement suspension and means for indirectly or directly feeding the slurry to one or more delivery devices.

The one or more feeding devices may comprise at least a portion with continuously moving walls, which may be internally partitioned by walls, one or more agitated devices, such as bristle brush shaped devices, one or more spraying systems, which continuously and randomly spray (droplets of) fiber cement suspension, provided by the one or more fiber cement suspension sources, onto the conveyor belt of any suitable combination of the one or more feeding systems.

Still, in certain embodiments, the step of dewatering the fiber cement suspension is performed by applying mechanical force by one or more mechanical presses, such as, without limitation, a mechanical belt press, which may optionally be installed adjacent to the belt.

If the fibre cement article is produced by extrusion, a static mechanical press may still be used.

In one aspect, the water in the production process of the present invention is present in a ratio of 0.4 to 10 times by weight of the amount of powdery material in the composition of the fiber cement suspension.

In one embodiment, the present invention provides a method of retaining solids in a production process with high fibre cement solids retention capacity by the dry-based formulation comprising:
a. A cementitious material,
b. A PVA reinforcing fiber material,
d. A cellulose fiber, and
d. A cellulose filamento.

In one aspect, the base formulation of the method of solids retention in production process having high fibre cement solids retention capacity may further comprise one or more mineral additions, fillers, rheological modifiers; and mineral additions having cementitious action.

In one embodiment, the present invention provides a fiber cement obtained by a method having high solids retention capacity for the production of fiber cement.

### Experimental details

### Experiment

### Raw Materials

The raw materials used were: cement, limestone filler, cellulose fibers and PVA fibers, cellulose filament CF1 and CF2, flocculant and water. The cellulose and PVA fibers have a density of 0.89 and 1.49 g/cm³, respectively. The flocculant used is based on polyacrylamide (Praestol) with solids content of 30%.

### Properties of granular materials

Some physical properties of the cement and filler used in the fiber cement formulation were measured and are presented in Table 1.

**Table 1 - Physical parameters of materials**

| | Parameters | Cement | Limestone filler |
|---|---|---|---|
| | ρs (g/cm³)^{a} | 3.08 | 2.74 |
| | D10 (µm) | 2.3 | 1.74 |
| | D50 (µm) | 14.4 | 10.50 |
| | D90 (µm) | 39.0 | 27.45 |
| | ASE_BET (m²/g)^{c} | 1.64 | 1.16 |
| ^{a} Actual density obtained via helium pycnometer | | | |
| ^{c} Specific surface area obtained by BET method | | | |

The cement used was a product of the Brazilian market of the CPV type of high initial strength in accordance with Standard ABNT NBR 16697. The chemical composition of the cement was determined by X-ray fluorescence spectrometry using the Axios Advanced equipment, brand PANalytical. The results are expressed in Table 2, with these data the mineral phases were estimated using the Bogue method (NEVILLE, Adam M. et al. Properties of concrete. London: Longman, 1995). The results estimated by the Bogue method demonstrate that the cement has high contents of Alite and Belite, and contents of aluminates, ferrite and calcite within the expected for a cement of initial high strength (CPV ARI).

| Table 2 - Chemical composition of cement | | | |
|---|---|---|---|
| | Oxides (%) | CPV | |
| | SiO2 | 19.1 | |
| | Al2O3 | 4.53 | |
| | Fe2O3 | 2.56 | |
| | CaO | 59.7 | |
| | MgO | 1.27 | |
| | SO3 | 2.99 | |
| | Loss to fire | 7.42 | |
| Bogue | | | |
| | C4AF | 7.8 | |
| | C3A | 7.7 | |
| | C3S | 55.3 | |
| | C2S | 13 | |
| * Equations for calculation of phase composition by Bogue: | | | |
| C3S = 4.07(CaO) - 7.60(SiO₂) - 6.72 (Al₂O₃) - 1.43(Fe₂O₃) - 2.85(SO₃); C2S = 2.87(SiO₂) - 0.75(3CaO.SiO₂); | | | |
| C3A = 2.65 (Al₂O₃) - 1.69(Fe₂O₃); C4AF = 3.04(Fe₂O₃) | | | |

### Scanning Electron Microscopy (SEM)

The CF was evaluated for its morphology and texture through transmission electron microscopy (TEM).

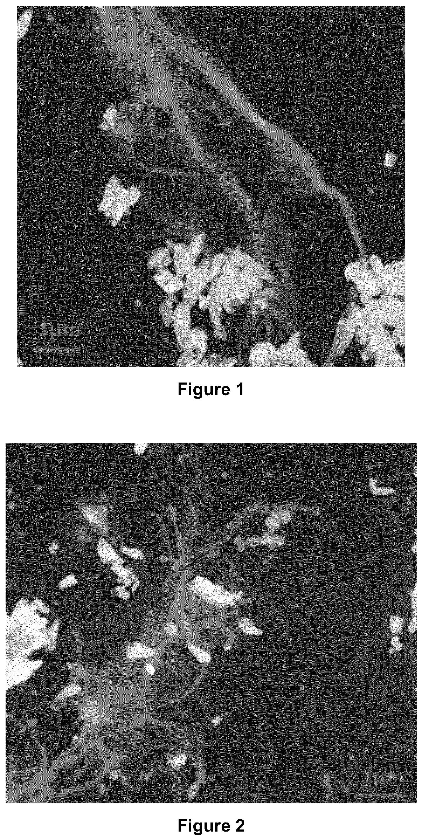

The images in Figures 1 and 2 show the morphology of CF with two levels of defibrillation, showing a "web" shape where the cellulose fibers are arranged randomly.

### Base formulation

The fibre cement base formulation used in this step is described in Table 4. This formulation has been referred to as reference REF.

| Table 4 - Fibre cement base formulation (REF). | | |
|---|---|---|
| Material | Proportion (%) | Mass (g) |
| Cement | 63 | 204.2 |
| Limestone | 31 | 103.4 |
| Cellulose fibre | 3.5 | 11.3 |
| PVA Fiber | 1.9 | 6 |
| Water (concentrated mixture) | | 228 |
| Water (dilution water) | | 1234.5 |
| Total water | | 1462.5 |

### Other formulations

Other formulations were tested with the difference being only the addition of cellulose filament (CF) or flocculant. The contents and nomenclatures of the other formulations are presented in Table 5.

The addition of the flocculant was 0.03% by mass while the CF (dry basis) was used in the content of 0.48% by mass of the dry fiber cement composition

| Table 5: Flocculant content and CF for each fiber cement formulation | | | |
|---|---|---|---|
| Formulation | Flocculant | CF 1 | CF 2 |
| REF | | | |
| FLOC | 0.03 | | |
| CF 1 | | 0.48 | |
| CF 2 | | | 0.48 |

### Preparation of fiber cement

### PVA Pre-dispersion

The dispersion of PVA fibers was performed in a device in which a jet of compressed air is injected at a pressure of 100 kgf/cm² for 30 + 10 s. At the top of the compartment there is a screen with an opening of 75 µm that retains the fibers.

### Mixture

For this mixing step, a planetary bench mortar (EMIC) was used. The preparation of the fiber cement suspension was carried out by the steps:
(a) Inserting the water into the mixer container;
(b) add the powders and mix at low speed (62±5 rpm) for 3 minutes;
(c) without turning off the mixer, first add the cellulose for 30 seconds and leave mixing for another 3 minutes.
(d, e) Then add the PVA for 30 seconds and mix for another 3 minutes. (f) After mixing all the materials, change the speed of the mixer to high (125±10 rpm) and add the dilution water already with the flocculant and/or CF, and mix for 5 minutes. The complete mixing process lasted 15 minutes. The CF before being incorporated into the dilution water was previously dispersed with 100g of water using a high energy mixer (Makita RT0700C at 10000rpm).

### Reproduction test of Hatschek process filtration step

### Gravity filtration

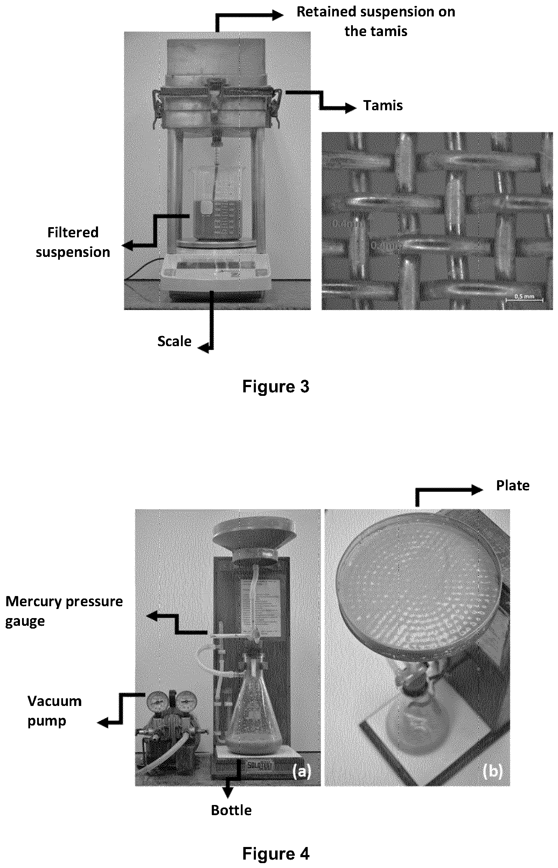

The filtration process was carried out without vacuum with a 0.4 mm mesh tamis (the same tamis used in the production of Hatschek fiber cement for the manufacture of flat or corrugated plates). Below the tamis the box has a hole through which the filtered suspension flows straight to a becher, which in turn is on a precision scale to record the evolution of the mass of suspension passing through the tamis. As illustrated in Figure 3.

In order to perform gravity filtration, the following steps were performed: (i) pour the concentrated suspension into the apparatus and allow the filtration to occur for approximately 25 minutes; (ii) Note the mass variation on the scale over the test time, with intervals of 30 seconds for each measurement.

### Vacuum filtration

This step was performed with the purpose of measuring the amount of fines and water of the suspension filtered in the previous step (gravity filtration). To perform this step, the equipment (Figure 4) was used to measure water retention in mortars (ABNT NBR 13277:2005). This equipment consists of a vacuum pump coupled to a mercury pressure gauge. Over the funnel, there is a plate where a filter paper is accommodated. The vacuum filtration procedure was carried out as follows: the suspension filtered in the previous step was poured at once into the equipment plate, which was covered with 80g/m² basic weight filter paper, and then the material was under the action of for 2 minutes. The cake retained on the plate was removed from the filter paper and placed in a container and the water content was determined through drying using two distinct procedures: (i) in a microwave (1500W - Brastemp) in three cycles of 5 min until the mass became constant; and (ii) in an oven for 48 h at 100°C. It was adopted that the liquid passing into the glass vial consisted only of water.

### Results

From the results obtained in the gravity filtration procedure and in the vacuum filtration procedure, the solids content (fibers, cement and filler) and water passing through the tamis were calculated, and by mass balance the percentages of retained solids and water were determined, totaling the fiber cement suspension retained in the tamis.

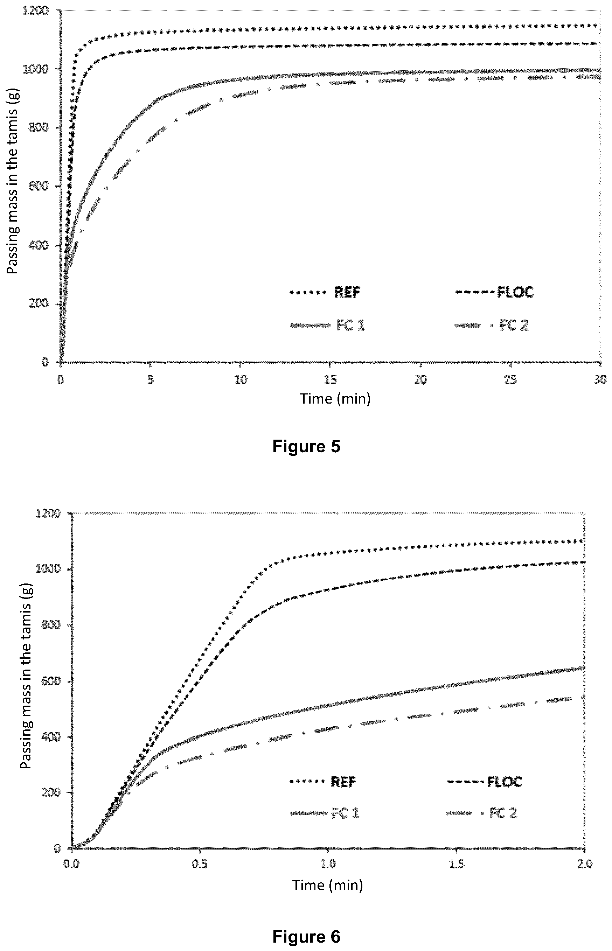

The gravity filtration step shows the influence of the use of CFs in the fiber cement filtration process. For each formulation the assay was repeated six times. The results (average of the 6 replicates) of the gravity filtration assays are presented in Figure 5 (complete assay up to 30min) and Figure 6 (visualization up to 2min). In the first 2 min of the test, interval with the greatest variations in filtration kinetics with the use of CF's and flocculant in relation to the reference.

It is noted that the use of CFs reduced the amount of suspension passing through the tamis, with a greater difference in the first minutes; this reduction occurred both in relation to the reference formulation and the mixture with flocculant, indicating that the CFs provide retention capacity of the fiber cement suspension (mainly solids, but also water) in the used tamis.

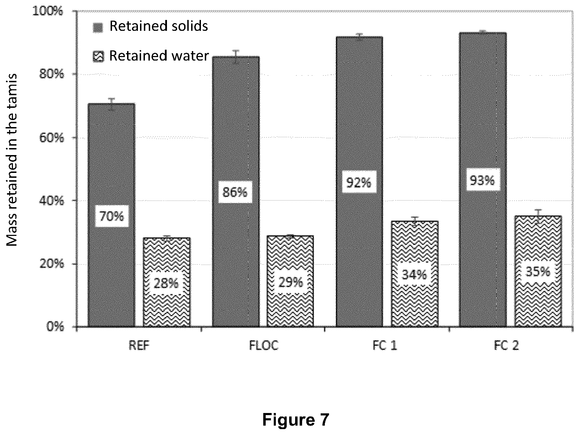

Figure 7 shows the percentages of mass of solids and water retained in the tamis after gravity filtration for the four analyzed formulations. The reference composition presented the lowest retention of solids and water as expected. On the other hand, the composition with CF presented the highest retention of solids among all formulations, even without the addition of flocculant. An efficiency gain of 7% compared to floc (industrial practice standard) and 23% compared to REF. These results confirm the efficiency of CF in increasing the solids retention capacity during the filtration of the fiber cement suspension.

The physical effect of cellulose filaments on the retention of cellulose fines and fibers and PVA proved to be more efficient than the physical-chemical effect of flocculation of the particles obtained through the incorporation of the chemical additive (flocculant).

In addition to higher solids retention, the formulations with addition of CF were also able to slightly increase water retention in the tamis when compared to the other formulations. This result may still be beneficial in the next steps of the fiber cement process. A slightly higher water retention may result in a greater plasticity of the material, which may prevent the increase of tensions and formation of defects in the compression step of the fiber cement for forming the parts. Greater fibre cement plasticity can also reduce the energy expended in the compression process.

It is noteworthy that the results presented in Figure 7 were calculated for 30 min of assay. However, as shown in Figure 6, for 2 min of assay, the solid retention of formulations with OF tends to be even higher than for the other formulations when compared to the 30 min results.

Thus, the tests demonstrate a significant increase in the retention of solids (powder and fibers) in the tamis due to the incorporation of CF, even without the use of flocculant. In addition to higher solids retention, the compositions with OF were also able to retain more water in the fiber cement, especially in the processed batch (with greater refinement). These results indicate improved efficiency of the filtration process during fiber cement production.

## Claims

1. A METHOD WITH HIGH SOLIDS RETENTION CAPACITY FOR THE PRODUCTION OF FIBRE CEMENT comprising the steps:
**a)** Preparing a fiber cement suspension by the addition and mixing of
a1) dispersion water and
a2) powdery material, reinforcing fiber material, cellulose filament and cellulose fiber so as to form a fiber cement suspension,
**b)** dewatering the fiber cement suspension, obtaining a fiber cement.

2. THE METHOD WITH HIGH SOLIDS RETENTION CAPACITY FOR THE PRODUCTION OF FIBER CEMENT according to claim 1, wherein the step a) of adding and mixing comprises adding the powdery material to the water, forming a mixture of water and powdery material, followed by adding the reinforcing fiber material, cellulose filament and cellulose fiber, forming a fiber cement suspension.

3. THE METHOD WITH HIGH SOLIDS RETENTION CAPACITY FOR THE PRODUCTION OF FIBER CEMENT according to claim 1, comprising the step a) of adding and mixing comprises adding the reinforcing fiber material to the water, forming a mixture of water and reinforcing fiber material, followed by adding the powdery material, cellulose filament and cellulose fiber, forming a fiber cement suspension.

4. THE METHOD WITH HIGH SOLIDS RETENTION CAPACITY FOR THE PRODUCTION OF FIBER CEMENT according to claim 1, comprising the step a) of adding and mixing comprises adding the cellulose filament to the water, forming a mixture of water and cellulose filament, followed by adding the powdery material, reinforcing fiber material and cellulose fiber, forming a fiber cement suspension.

5. THE METHOD WITH HIGH SOLIDS RETENTION CAPACITY FOR THE PRODUCTION OF FIBER CEMENT according to claim 1, comprising the step a) of adding and mixing comprises adding the cellulose fiber to the water, forming a mixture of water and cellulose fiber, followed by adding the powdery material, reinforcing fiber material and cellulose filament, forming a fiber cement suspension.

6. THE METHOD WITH HIGH SOLIDS RETENTION CAPACITY FOR THE PRODUCTION OF FIBER CEMENT according to the preceding claim, comprising water is added in a ratio of 0.4 to 10 times the weight of powdery material present in the fiber cement suspension composition.

7. THE METHOD WITH HIGH SOLIDS RETENTION CAPACITY FOR THE PRODUCTION OF FIBER CEMENT according to claim 1, further comprising adding one or more mineral additions may be filers, rheological modifiers; and mineral additions with cementitious action.

8. THE METHOD WITH HIGH SOLIDS RETENTION CAPACITY FOR THE PRODUCTION OF FIBER CEMENT according to claim 1, further comprising adding one or more filler selected from calcium carbonate, magnesium carbonate, calcium and magnesium carbonate, silica, alumina, phyllites, iron oxides, iron hydroxides, magnesium oxide, magnesium hydroxide, calcium hydroxide, mining residues and other industries containing the recited materials, and mixtures thereof.

9. THE METHOD WITH HIGH SOLIDS RETENTION CAPACITY FOR THE PRODUCTION OF FIBER CEMENT according to claim 1, further comprising adding a flocculant.

10. THE METHOD WITH HIGH SOLIDS RETENTION CAPACITY FOR THE PRODUCTION OF FIBER CEMENT according to claim 1, further comprising adding a flocculant selected from cationic, anionic, non-ionic, amphoteric, hydrophobic or hydrophilic polymers, or mixtures thereof.

11. THE METHOD WITH HIGH SOLIDS RETENTION CAPACITY FOR THE PRODUCTION OF FIBER CEMENT, according to the preceding claim, comprising in that the flocculant is selected from anionic polyacrylamides (Pam) copolymers of acrylamide and acrylic acid, phenol-formaldehyde resin (PFR), poly (ethylene oxide) (PEO), or mixtures thereof.

12. THE METHOD WITH HIGH SOLIDS RETENTION CAPACITY FOR THE PRODUCTION OF FIBER CEMENT according to the preceding claim, comprising the flocculant comprises at least one anionic polyacrylamide (Pam).

13. THE METHOD WITH HIGH SOLIDS RETENTION CAPACITY FOR THE PRODUCTION OF FIBER CEMENT, according to claim 1, **characterized in that** the dewatering step is carried out by means of sizing, followed by vacuum along the conveyor belts and finally by pressing into forming cylinders.

14. THE METHOD WITH HIGH SOLIDS RETENTION CAPACITY FOR THE PRODUCTION OF FIBER CEMENT according to the preceding claim, **characterized in that** the step of dewatering the fiber cement suspension is preferably carried out by means of suction.

15. METHOD WITH HIGH SOLIDS RETENTION CAPACITY FOR the PRODUCTION OF FIBER CEMENT according to the preceding claim, **characterized in that** the dewatering step is through a water permeable conveyor belt.

16. THE METHOD WITH HIGH SOLIDS RETENTION CAPACITY FOR THE PRODUCTION OF FIBER CEMENT according to claim 1, comprising the powdery material comprises at least one cement.

17. THE METHOD WITH HIGH SOLIDS RETENTION CAPACITY FOR THE PRODUCTION OF FIBER CEMENT according to claim 1, comprising the powdery material comprises at least one cement selected from Portland cement, silicate-based cements, aluminate-based cements such as calcium aluminate, pozzolanic cements, composite cements, geopolymer-based cements activated by alkaline solutions, magnesian cements, blast furnace slag cements.

18. THE METHOD WITH HIGH SOLIDS RETENTION CAPACITY FOR THE PRODUCTION OF FIBER CEMENT according to claim 1, comprising reinforcing fiber material is added in a proportion of 0.1% to 3% by weight of the powdery material.

19. THE METHOD WITH HIGH SOLIDS RETENTION CAPACITY FOR THE PRODUCTION OF FIBER CEMENT, according to claim 1, **characterized in that** the reinforcing fiber material comprises at least one fiber selected from process fibers, natural vegetable fibers, natural mineral fibers, synthetic fibers, which may be fiber fibers, polymeric fibers, Poly(vinyl acetate) (PVA) fibers, poly acrylonitrile (PAN), polypropylene (PP), polyethylene terephthalate (PET), fibrapolyethylene (PE) fibers, etc.), inorganic synthetic fibers, glass fibers or, synthetic rock wool fiber, wool fiber), metallic synthetic fiber, steel fiber and the like, their alloys, other various alloys, preferably, the reinforcing fiber material is a Poly(vinyl acetate) (PVA) fiber and polypropylene (PP), or mixtures thereof.

20. THE METHOD WITH HIGH SOLIDS RETENTION CAPACITY FOR THE PRODUCTION OF FIBER CEMENT according to claim 1, comprising the reinforcing fiber material comprises reinforcing fibers having a length between 0.5 and 20 mm.

21. THE METHOD WITH HIGH SOLIDS RETENTION CAPACITY FOR THE PRODUCTION OF FIBER CEMENT according to the preceding claim, **characterized in that** the cellulose fiber is preferably refined to a degree between 45 and 70 Schopper Riegler and is typically 0.6 to 4 mm in length.

22. THE METHOD WITH HIGH SOLIDS RETENTION CAPACITY FOR THE PRODUCTION OF FIBER CEMENT according to the preceding claim, **characterized in that** the cellulose fiber is added in the proportion of 1-10% by weight of the powdery material, preferably between 2 to 6% by weight of the powdery material.

23. THE METHOD WITH HIGH SOLIDS RETENTION CAPACITY FOR THE PRODUCTION OF FIBER CEMENT according to claim 1, **characterized in that** the cellulose fiber is long and short fiber cellulosic pulps, bleached and unbleached, recycled fibers, and cellulose-based products (paper).

24. THE METHOD WITH HIGH SOLIDS RETENTION CAPACITY FOR THE PRODUCTION OF FIBER CEMENT according to the preceding claim, **characterized in that** the cellulose filament is added in the proportion of 0.1% to 3% by weight of the powdery material, preferably 0.4 to 1.5% by weight of the powdery material.

25. THE METHOD WITH HIGH SOLIDS RETENTION CAPACITY FOR THE PRODUCTION OF FIBER CEMENT according to the preceding claim, comprising the cellulose filament is in a pre-dispersed form.

26. THE METHOD WITH HIGH SOLIDS RETENTION CAPACITY FOR THE PRODUCTION OF FIBER CEMENT according to the preceding claim, **characterized in that** the cellulose filament has a diameter between 20 nm and 700 nm, preferably from 80nm to 600 nm and more preferably from 300 nm to 500 nm.

27. THE METHOD WITH HIGH SOLIDS RETENTION CAPACITY FOR THE PRODUCTION OF FIBER CEMENT, according to the preceding claim, **characterized in that** the cellulose filament has a length greater than 1 µm, preferably greater than 10 micrometers.

28. THE METHOD WITH HIGH SOLIDS RETENTION CAPACITY FOR THE PRODUCTION OF FIBER CEMENT according to claim 1, comprising the cellulose filament is a pre-dispersed cellulose filament.

29. THE METHOD WITH HIGH SOLIDS RETENTION CAPACITY FOR THE PRODUCTION OF FIBER CEMENT according to the preceding claim, comprising the dispersion water is in a mass ratio between 0.4 and 10 times the mass of the powdery material.

30. A METHOD for producing a fibre cement component **characterized in that** the fibre cement is obtained according to the method of claim 1.

31. A METHOD for producing a fibre cement component according to the preceding claim, **characterized by** applying a curing step to the fibre cement component.

32. USE OF A METHOD WITH HIGH SOLIDS RETENTION CAPACITY FOR THE PRODUCTION OF FIBER CEMENT according to claim 1 for the manufacture of a fiber cement article.

33. USE OF A METHOD WITH HIGH SOLIDS RETENTION CAPACITY FOR THE PRODUCTION OF FIBER CEMENT, **characterized by** the application of a curing step of the article obtained by the production of a fiber cement article according to the preceding claim.

34. USE OF A METHOD WITH HIGH SOLIDS RETENTION CAPACITY FOR THE PRODUCTION OF FIBER CEMENT, according to the preceding claim, for the manufacture of tiles, plates and other fiber cement products.

35. A PRODUCTION PROCESS WITH HIGH SOLIDS RETENTION CAPACITY FOR THE PRODUCTION OF FIBRE CEMENT comprising:
(1) providing a fiber cement suspension comprising pulverulent material, reinforcing fiber material, cellulose filament and cellulose fiber,
(2) discharging the fiber cement suspension onto a conveyor belt, and
(3) dewatering the fiber cement suspension to form a fiber cement having a predetermined thickness.

36. THE PRODUCTION PROCESS WITH HIGH SOLIDS RETENTION CAPACITY FOR THE PRODUCTION OF FIBRE CEMENT according to the preceding claim, **characterized in that** step (3) of dewatering the fiber cement suspension is achieved by at least one of: conveyor belt, screen cylinder, or both.

37. THE PRODUCTION PROCESS WITH HIGH SOLIDS RETENTION CAPACITY FOR THE PRODUCTION OF FIBRE CEMENT according to the preceding claim, **characterized in that** the fiber cement suspension is a fiber cement suspension obtained according to step a1) of claim 1.

38. THE METHOD OF RETAINING SOLIDS IN A PRODUCTION PROCESS WITH HIGH FIBER CEMENT SOLIDS RETENTION CAPACITY according to claim 1 or 37, wherein the dry-based formulation comprises:
**a)** A cementitious material,
**b)** A PVA reinforcing fiber material,
**c)** A cellulose fiber, and
**d)** A cellulose filament.

39. THE METHOD OF RETAINING SOLIDS IN A PRODUCTION PROCESS WITH HIGH FIBER CEMENT SOLIDS RETENTION CAPACITY according to claim 38, wherein the dry-based formulation further comprises a mineral addition.

40. FIBRE CEMENT obtained by the METHOD WITH HIGH SOLIDS RETENTION CAPACITY FOR THE PRODUCTION OF FIBRE CEMENT according to claim 1.
